Europäisches Patentamt

**European Patent Office**

Office européen des brevets

(11) Veröffentlichungsnummer: **0 322 470 B1**

# EUROPÄISCHE PATENTSCHRIFT

(45) Veröffentlichungstag der Patentschrift: **04.12.91**

(51) Int. Cl.⁵: **G01B 11/10, B65H 63/06, D01H 13/32**

(21) Anmeldenummer: **87119212.6**

(22) Anmeldetag: **24.12.87**

(54) **Einrichtung zum Messen eines Fadens.**

(43) Veröffentlichungstag der Anmeldung:
**05.07.89 Patentblatt 89/27**

(45) Bekanntmachung des Hinweises auf die
Patenterteilung:
**04.12.91 Patentblatt 91/49**

(84) Benannte Vertragsstaaten:
**AT BE CH DE FR GB IT LI LU NL SE**

(56) Entgegenhaltungen:
WO-A-84/01622     DE-B- 1 048 050
FR-A- 1 281 486    FR-A- 1 463 560
GB-A- 994 917      US-A- 3 401 267
US-A- 3 582 661    US-A- 3 712 743
US-A- 3 840 869

(73) Patentinhaber: **BARCO AUTOMATION, NAAM-
LOZE VENNOOTSCHAP
Frankrijklaan 18
B-8970 Poperinge(BE)**

Patentinhaber: **W. SCHLAFHORST AG & CO.
Blumenberger Strasse 143-145
W-4050 Mönchengladbach 1(DE)**

(72) Erfinder: **Van Liefde, Yvan
Oudenhovestraat 14
B-8620 Zottegem(BE)**
Erfinder: **De Vuyst, Marcel
Wolstraat 9
B-8790 Waregem(BE)**
Erfinder: **Goetsches, Peter
Bolksbuscher Strasse 87
W-4050 Mönchengladbach(DE)**

(74) Vertreter: **Möhrke, Dieter, Dipl.-Ing.
Blumenberger Strasse 143/145
W-4050 Mönchengladbach 1(DE)**

**Beschreibung**

Die Erfindung betrifft eine Einrichtung zum Messen eines Fadens mit den Merkmalen des Oberbegriffs des Anspruchs 1.

Derartige Einrichtungen werden beispielsweise an Textilmaschinen zur Fadenüberwachung eingesetzt. Dabei tritt das Problem der Verschmutzung und der Beeinflussung durch Fremdlicht auf.

Die EP-A-0 227 861 schafft hier Abhilfe, indem gegenüber einer Lichtquelle zwei lichtempfindliche Elemente als Meßwertaufnehmer angeordnet sind, wobei der zu messende Faden durch Führungselemente derartig angeordnet und geführt ist, daß er nur das eine der beiden lichtempfindlichen Elemente abschattet. Der nicht abgeschattete Meßwertaufnehmer dient als Vergleichsbasis. Der Vergleich der beiden Meßwerte führt dazu, daß durch übliche Verschmutzung und Verstaubung keine Beeinträchtigung der Meßgenauigkeit eintritt, da die Verschmutzung und Verstaubung beide Meßwertaufnehmer etwa gleichartig beeinflußt. Ebenso beeinflußt Fremdlicht in aller Regel beide Meßwertaufnehmer, wodurch auch eine solche Meßwertverfälschung ausgeschlossen werden kann. Als Lichtquelle ist dabei eine Punktlichtquelle eingesetzt. Allerdings sind Punktlichtquellen, beispielsweise Leuchtdioden, mit brauchbaren Lichtverteilungskurven relativ kostenaufwendig.

Es ist deshalb Aufgabe der Erfindung, die gattungsgemäße Vorrichtung so weiterzubilden, daß ohne Beeinträchtigung der Meßgenauigkeit kostengünstigere Lichtquellen einsetzbar sind.

Diese Aufgabe wird erfindungsgemäß durch die kennzeichnenden Merkmale des Anspruchs 1 gelöst.

Durch die Verwendung des erfindungsgemäßen Blendensatzes können Randgebiete der Lichtverteilungskurve ausgeblendet werden. Deshalb sind an die Lichtverteilungskurve der Lichtquelle keine besonderen Anforderungen zu stellen. Die Blendenränder können bereits an ein rechteckiges Lichtaustrittsfenster beziehungsweise an Meßwertaufnehmer mit rechteckiger Lichtempfangsfläche angepaßt werden.

In Weiterbildung der Erfindung ist vorgesehen, daß die erste Blende des Blendensatzes möglichst nahe an der Lichtquelle und die letzte Blende möglichst nahe am Meßschlitz angeordnet ist, daß zwischen den einzelnen Blenden gleiche Abstände oder mit zunehmender Blendenöffnung größer werdende Abstände vorhanden sind, daß die Blenden alternativ jeweils die Form eines Rahmens haben, dessen Rahmenöffnung als umlaufende Schneide ausgebildet ist, daß die Schneide an der der Lichtquelle abgewandten Seite eine Hinterschneidung aufweist, die vom direkten, von der Lichtquelle ausgehenden Licht nicht mehr getroffen wird, daß der Hinterschneidungswinkel von Rahmen zu Rahmen in Strahlungsrichtung stumpfer wird, daß alternativ der Blendensatz als ein in das Gehäuse der Einrichtung einsetzbarer, starrer oder halbstarrer Blendeneinsatz ausgebildet ist, der vorteilhaft aus praktischen Gründen aus Teilen besteht, die wie Wanne und Deckel aufeinanderpassen, wobei der Blendeneinsatz entweder aus mindestens einem wannenförmigen Unterteil und mindestens einem wannenförmigen Oberteil besteht, deren Teilfugen vorzugsweise durch die Schmalseiten der Blendenrahmen gehen, oder daß der Blendeneinsatz aus mindestens einem wannenförmigen Teil und aus mindestens einem dazu passenden deckelförmigen Teil besteht, deren Teilfugen in den Rahmenecken oder in der Nähe der Rahmenecken liegen.

Die beanspruchte Blendengestaltung besitzt verschiedene Vorteile. In optischer Hinsicht wird auf die Lichtverteilung günstig eingewirkt, so daß zum Beispiel preiswerte Lichtquellen zum Einsatz kommen können. In fabrikatorischer Hinsicht sind Anfertigung und Montage erleichtert.

In Weiterbildung der Erfindung kann zwischen Lichtquelle und Meßschlitz ein die Lichtstrahlen parallelisierendes optisches Element angeordnet sein, beispielsweise eine Sammellinse. Laufen die Lichtstrahlen parallel durch den Meßschlitz, so ist die Lage des Fadens im Meßschlitz weniger kritisch in bezug auf das Meßergebnis.

In Weiterbildung der Erfindung ist vorgesehen, daß die lichtempfindlichen Elemente rechteckige Lichteintrittsflächen besitzen, daß die Schmalseite des einen querliegenden Elements neben der Breitseite des anderen hochkantliegenden Elements angeordnet ist und daß der zu messende Faden vor dem querliegenden Element angeordnet ist.

Ist der Faden vor dem querliegenden Element angeordnet, so ergeben sich exaktere Meßwerte, als wenn er vor dem hochkantliegenden Element angeordnet wäre. Die Tiefe des Meßschlitzes ist bei der vorgeschlagenen Anordnung geringer, als wenn zwei querliegende Meßwertaufnehmer nebeneinanderliegen würden. Ein kürzerer Meßschlitz hat konstruktive Vorteile und mindert die Verschmutzungsgefahr.

In Weiterbildung der Erfindung ist der zu messende Faden vor demjenigen lichtempfindlichen Element angeordnet, das sich gegenüber dem hinteren Teil des Meßschlitzes befindet, wobei beim Vorbeigang des Fadens vor dem jeweils anderen lichtempfindlichen Element anläßlich des Einführens des Fadens in den Meßschlitz und/oder anläßlich des Herausbewegens des Fadens zur Seite hin aus dem Meßschlitz ein kurzzeitiges Fadensignal gewinnbar ist. Das Fadensignal kann beispielsweise zur Steuerung eines Spulautomaten dienen.

Die Licht empfangenden FLächen der Meßwertaufnehmer können gleich groß sein. In Ausnahmefällen können sie aber auch ungleich groß sein. Dies wird dann bei der Weiterverarbeitung der Meßwerte berücksichtigt.

In Weiterbildung der Erfindung ist vorgesehen, daß die beiden nebeneinanderliegenden lichtempfindlichen Elemente staubdicht gekapselt und/oder in eine staubdichte Kammer eingesetzt sind. Die Kapselung beziehungsweise die Kammer ist selbstverständlich an der Lichteintrittsseite lichtdurchlässig zu gestalten.

In Weiterbildung der Erfindung ist die Lichtquelle, gegebenenfalls einschließlich eines Blendenatzes und/oder einschließlich eines die Lichtstrahlen parallelisierenden optischen Elements, in einer staubdichten Kammer angeordnet. Auch diese Kammer hat selbstverständlich mindestens an der Lichtaustrittsseite eine lichtdurchlässige Wandung. Die erwähnten Kammern sind vorteilhaft gegen Streulichteinfluß geschwärzt.

Der Begriff Licht umfaßt das ganze Spektrum des sichtbaren und unsichtbaren Lichts. Es bleibt dem Anwender überlassen, aus diesem Spektrum eine für den jeweiligen Meßzweck besonders geeignete Wellenlänge beziehungsweise Frequenz auszuwählen.

In Weiterbildung der Erfindung ist vorgesehen, daß mit Abstand von einem den Meßschlitz enthaltenden Rahmen oder Gehäuse oberhalb und unterhalb des Meßschlitzes je ein Fadenführungselement angeordnet und durch eine Tragkonstruktion mit dem Rahmen oder Gehäuse derartig verbunden ist, daß zwischen Meßschlitz und Fadenführungselementen ein freier Durchgang für Reinigungsluft vorhanden ist.

Eine derartige Anordnung von Fadenführungselementen bringt einen Selbstreinigungszweck zustand, so daß die Anordnung weniger verschmutzt als herkömmliche Vorrichtungen.

Vorteilhaft ist die Tragkonstruktion des auf Abstand vom Meßschlitz gehaltenen Fadenführungselements ein Teil des die Einrichtung umschließenden oder tragenden Rahmens oder Gehäuses.

In Weiterbildung der Erfindung ist vorgesehen, daß die Tragkonstruktion des Fadenführungselements aus einem durch Biegestanzen, Spritzgießen oder auf dergleichen Weise aus dem Rahmen, einer Gehäusewand oder dem Deckel der Einrichtung herausgebildeten, nach außen vorspringenden Teil besteht.

Ausführungsbeispiele der Erfindung sind in den Zeichnungen dargestellt. Anhand der Ausführungsbeispiele wird die Erfindung noch näher beschrieben und erläutert.

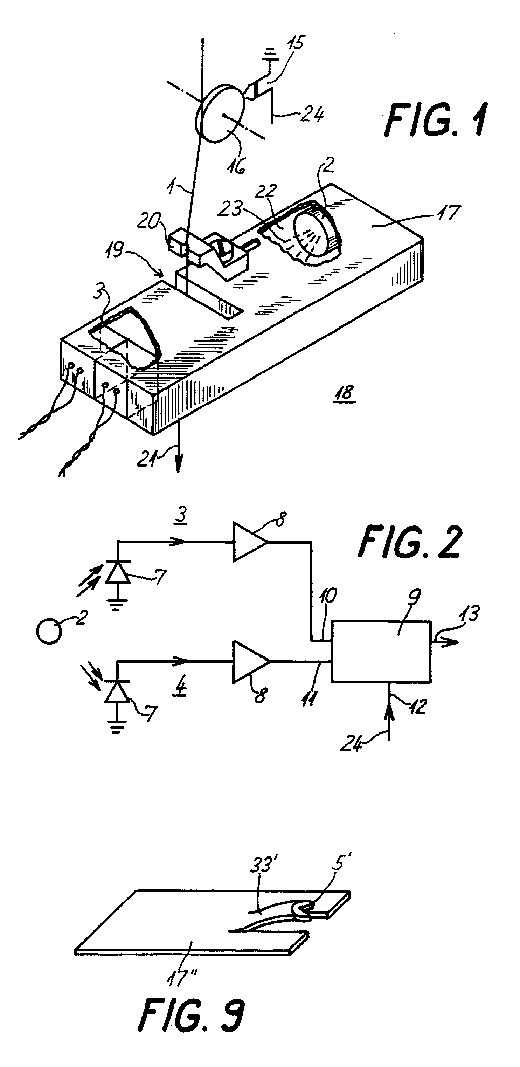

Fig. 1
zeigt die perspektivische Ansicht der gesamten Meßeinrichtung.
Fig. 2
zeigt ein Schaltbild der Vorrichtung nach Fig. 1.
Fig. 3
zeigt insbesondere die neuartige Blendenanordnung.
Fig. 4
zeigt insbesondere die neuartige Anordnung der Fadenführungselemente.
Fig. 5
zeigt eine alternative Anordnung der Meßwertaufnehmer.
Fig. 6
zeigt im Schnitt Einzelheiten eines Blendensatzes.

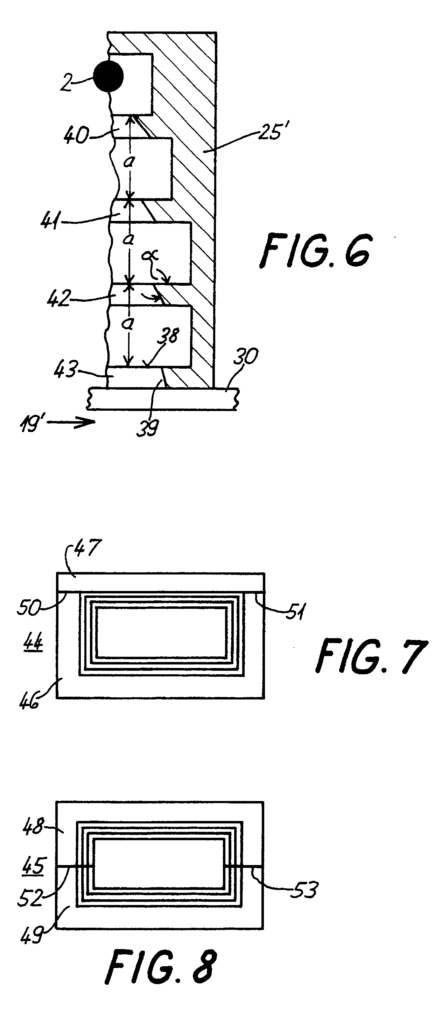

Die Fig. 7 und 8
zeigen die Lage der Trennfugen an einem Blendeneinsatz
Fig. 9
zeigt ein durch Biegestanzen aus einem Deckel hergestelltes Fadenführungselement.

Das Gehäuse 17 einer insgesamt mit 18 bezeichneten optoelektrischen Einrichtung zum Messen eines Fadens 1 besitzt nach Fig. 1 einen Meßschlitz 19, durch den mittels eines Fadenführungselements 20 der um das Meßrad 16 geschlungener Faden 1 hindurchgeführt ist. Der Faden 1 läuft in Richtung des Pfeils 21.

In dem Gehäuse 17 ist eine Kammer 22 ausgebildet, in der eine Lichtquelle 2 angeordnet ist, deren Lichtstrahlen 23 quer durch den Meßschlitz 19 gehen und dann auf zwei nebeneinanderliegende Meßwertaufnehmer 3 und 4 auftreffen. Es handelt sich bei den Meßwertaufnehmern 3 und 4 um zwei lichtempfindliche Elemente, auf die später noch näher eingegangen wird.

Das Fadenführungselement 20 führt den laufenden Faden so, daß er nur das lichtempfindliche Element 3 abschattet, nicht aber das andere lichtempfindliche Element 4.

Fig. 2 zeigt, daß jeder der beiden Meßwertaufnehmer 3 und 4 eine Photodiode 7 besitzt, an die ein Verstärker 8 angeschlossen ist. Die Ausgänge der beiden Verstärker 8 sind an Eingänge 10 und 11 einer Auswerteeinrichtung 9 angeschlossen. Über einen weiteren Eingang 12 wird die Auswerteeinrichtung 9 über eine Leitung 24 mit einer von der Fadenlaufgeschwindigkeit abhängigen Taktfrequenz gespeist. Die Taktfrequenz entstammt einem induktiven Impulsaufnehmer 15, der das mit Magnetbalken versehene Meßrad 16 abtastet. Pro Millimeter laufender Fadenlänge geht ein Impuls an den Eingang 12 der Auswerteeinrichtung 9. Am Ausgang 13 der Auswerteeinrichtung 9 werden Digitalwerte ausgegeben, die dem Vergleichsergebnis aus den von den Meßwertaufnehmern 3 und 4 empfangenen Lichtströmen entsprechen. Von Millimeter zu Millimeter Fadenlänge fortschreitend entsteht so ein digitales Abbild des Fadendurchmessers.

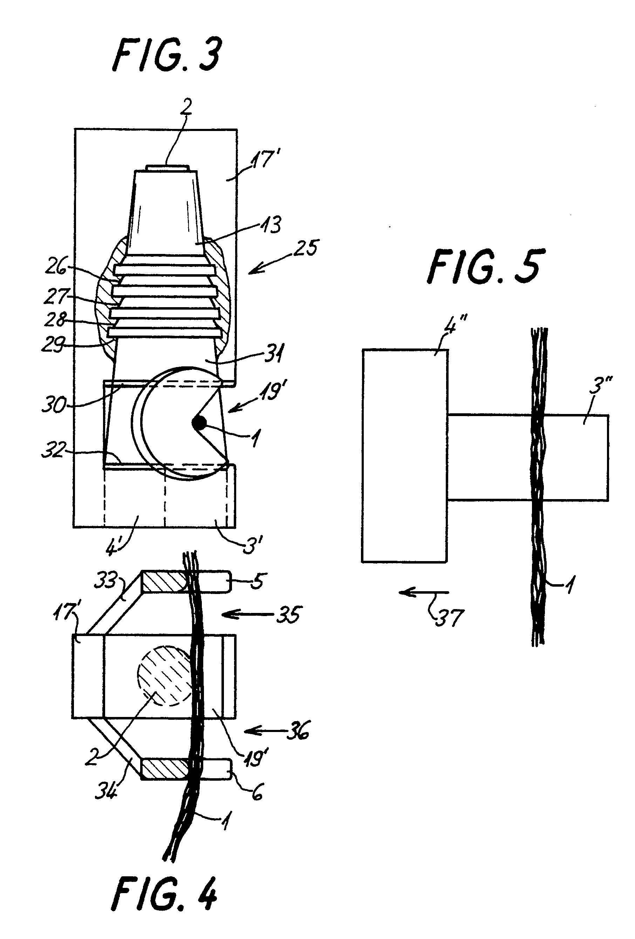

Bei der Variante nach Fig. 3 ist in dem Gehäuse 17' eine staubdichte Kammer 13 angeordnet. Die staubdichte Kammer 13 enthält die Lichtquelle 2 und einen Blendensatz 25, der aus hintereinander angeordneten Blenden 26 bis 29 besteht. Zum Meßschlitz 19' hin ist die staubdichte Kammer 13 durch eine Glasplatte 30 abgedeckt. Die Blendenweite nimmt in Strahlungsrichtung zu. Alternativ kann statt der Blenden oder zusätzlich anstelle der Glasplatte 30 oder im Bereich 31 der Kammer 13 ein die Lichtstrahlen parallelisierendes optisches Element, beispielsweise eine Sammellinse, angeordnet sein.

Bei der Ausbildung nach Fig. 3 sind die beiden nebeneinanderliegenden lichtempfindlichen Elemente 3' und 4' staubdicht durch eine weitere Glasplatte 32 gekapselt. Statt dessen könnten auch sie in eine staubdichte Kammer ähnlich der Kammer 13 eingesetzt sein. Die gegen die Lichtquelle gerichteten Flächen der Elemente müssen nicht unbedingt parallelliegen. Wenn sie zwischen sich einen Winkel kleiner als 180 Grad einschließen, können sie gegebenenfalls besser an die jeweilige Lichtverteilungskurve angepaßt sein.

Bei der Ausbildung nach Fig. 4 ist mit Abstand von dem die Lichtquelle 2, den Meßschlitz 19' und die Meßwertaufnehmer 3', 4' enthaltenden Gehäuse 17' oberhalb und unterhalb des Meßschlitzes 19' je ein Fadenführungselement 5 beziehungsweise 6 angeordnet.

Das Fadenführungselement 5 ist durch eine Tragkonstruktion 33, das Fadenführungselement 6 durch eine Tragkonstruktion 34 mit dem Gehäuse 17' derartig verbunden, daß zwischen Meßschlitz 19' und Fadenführungselementen 5, 6 ein freier Durchgang 35 beziehungsweise 36 in einer Breite von 4 bis 8 Millimeter für Reinigungsluft vorhanden ist. Die Reinigungsluft entstammt beispielsweise dem laufenden Faden 1, der bei höheren Laufgeschwindigkeiten einen für Reinigungszwecke ausreichenden Luftzug und Luftwirbelungen verursachen kann. Die Reinigungsluft kann aber auch aus der Umgebung beziehungsweise aus besonderen Reingungseinrichtungen von Fall zu Fall oder kontinuierlich zugeführt werden.

Bei der Ausbildung nach Fig. 5 besitzen die lichtempfindlichen Elemente 3" und 4" rechteckige Lichteintrittsflächen. Die Schmalseite des Elements 3" ist neben der Breitseite des anderen Elements 4" angeordnet. Der zu messende Faden 1 ist vor dem querliegenden Element 3" angeordnet. Das lichtempfindliche Element 3" wird vorteilhaft gegenüber dem hinteren Teil des Meßschlitzes angeordnet, so daß beim Vorbeigang des Fadens 1 vor dem anderen lichtempfindlichen Element 4" anläßlich des Einführens des Fadens 1 in den Meßschlitz und/oder anläßlich des Herausbewegens des Fadens 1 zur Seite hin in Richtung des Pfeils

37 aus dem Meßschlitz heraus ein kurzzeitiges Fadensignal gewinnbar ist. Dieses Fadensignal ist für Steuerungs- und Überwachungszwecke brauchbar. An einem Spulautomaten kann beispielsweise dieses Fadensignal die Anwesenheit des Fadens, das Einlegen des Fadens oder den Beginn einer Fadenverbindungstätigkeit signalisieren. Daraufhin können bestimmte Steuerprogramme anlaufen, die sich auf den Wickelbetrieb beziehungsweise das Wiederherstellen des Wickelbetriebs beziehen.

Bei der Ausbildung nach Fig. 6 ist bei dem Blendensatz 25' die erste Blende 40 möglichst nahe an der Lichtquelle 2 angeordnet. Es folgen drei weitere Blenden 41, 42 und 43. Die letzte Blende 43 ist möglichst nahe am Meßschlitz 19' unmittelbar an der Glasplatte 30 angeordnet. Zwischen den einzelnen Blenden 40 bis 43 sind gleiche Abstände a vorhanden. Alternativ können zwischen den Blenden mit zunehmender Blendenöffnung größer werdende Abstände vorhanden sein. Dabei genügt es unter Umständen, verhältnismäßig geringe Abstandsdifferenzen einzustellen.

Die Blenden 40 bis 43 haben jeweils die Form eines Rahmens, dessen äußere Gestalt die Fig. 7 und 8 wiedergeben. Die Rahmenöffnung des jeweiligen Rahmens ist jeweils als eine umlaufende Schneide 38 ausgebildet, wie in Fig. 6 an der Blende 43 angedeutet ist. Die Schneiden der einzelnen Blendenrahmen weisen an der der Lichtquelle 2 abgewandten Seite eine Hinterschneidung 39 auf, wie in Fig. 6 ebenfalls an der Blende 43 angedeutet ist. Wie die Schneide, so ist auch die Hinterschneidung umlaufend, also an allen Stellen der Rahmenöffnung vorhanden. Die Hinterschneidung 39 wird vom direkten, von der Lichtquelle 2 ausgehenden Licht nicht mehr getroffen.

Von Rahmen zu Rahmen wird der Hinterschneidungswinkel alpha in Strahlungsrichtung stumpfer, wie ebenfalls in Fig. 6 deutlich zu sehen ist.

Der Blendensatz 25' soll als ein in das Gehäuse 17' der Einrichtung 18 einsetzbarer Blendeneinsatz ausgebildet sein.

Nach Fig. 7 besteht der Blendeneinsatz 44 aus den Teilen 46 und 47. Nach Fig. 8 besteht der Blendeneinsatz 45 aus den Teilen 48 und 49. Die Teile passen jeweils wie Wanne und Deckel aufeinander.

Nach Fig. 7 liegt auf dem wannenförmigen Unterteil 46 der dazu passende deckelförmige Teil 47. Die Teilfugen 50 und 51 befinden sich in den Rahmenecken.

Bei der Ausbildung nach Fig. 8 sitzt auf dem wannenförmigen Unterteil 49 ein ebenfalls wannenförmiger Oberteil 48. Die Teilfugen 52 und 53 gehen hier durch die Schmalseiten der Blendenrahmen.

Bei der Ausbildung nach Fig. 9 ist die Tragkonstruktion 33′ des auf Abstand vom Meßschlitz 19′ gehaltenen Fadenführungselements 5′ ein Teil des die Einrichtung 18 umschließenden Gehäuses 17′, genauer gesagt eines Gehäusedeckels 17″. Die Tragkonstruktion 33′ besteht hier aus einem durch Biegestanzen aus dem Gehäusedeckel 17″ der Einrichtung 18 herausgebildeten, nach außen vorspringenden Teil.

Das Fadenführungselement 5′ besteht aus einem gekerbten Plättchen aus Sinterkeramik, das in das an seinem Ende gabelförmig ausgebildete Tragkonstruktionsteil 33′ eingepreßt ist.

## Patentansprüche

1. Einrichtung zum Messen eines Fadens, bei der aus dem Grad der Abschattung, die der Faden (1) oder sein Spiegelbild an einem lichtempfindlichen Element (4; 4′; 4″) verursacht, auf mindestens eine Fadendimension geschlossen wird und bei der der Faden in einen Meßschlitz (19, 19′) der Meßeinrichtung eingelegt ist, wobei seitlich des Meßschlitzes (19, 19′) nebeneinanderliegend zwei lichtempfindliche Elemente (3, 4; 3′, 4′; 3″, 4″) als Meßwertaufnehmer angeordnet sind, die aus ein und derselben Lichtquelle (2) quer durch den Meßschlitz (19, 19′) gehendes Licht (23) empfangen, der Faden (1) durch Führungselemente (20; 5, 6) derartig angeordnet und geführt ist, daß er nur das eine der beiden lichtempfindlichen Elemente (3, 3′ ,3″) abschattet, und die Meßwertaufnehmer (3, 4; 3′, 4′; 3″, 4″) an eine Vergleichseinrichtung (9) und/oder Auswerteeinrichtung (14) angeschlossen sind, in der physikalische Größen miteinander verglichen werden, die aus den von den beiden Meßwertaufnehmern (3, 4; 3′, 4′; 3″, 4″) empfangenen Lichtströmen resultieren, wobei derjenige Lichtstrom, der von dem nicht durch den Faden (1) abgeschatteten Meßwertaufnehmer (4; 4′; 4″) empfangen wird, als Vergleichsbasis dient und das Vergleichsergebnis ein Maß für die gemessene Dimension des Fadens (1) ist,

**dadurch gekennzeichnet,**

daß
zwischen Lichtquelle (2) und Meßschlitz (19′) ein Blendensatz (25; 25′) angeordnet ist, wobei von der Lichtquelle aus gesehen die Fensterfläche der Blenden (40 bis 43) von Blende zu Blende fortschreitend zunimmt.

2. Einrichtung nach Anspruch 1, dadurch gekennzeichnet, daß die erste Blende (40) des Blendensatzes (25′) möglichst nahe an der Lichtquelle (2) und die letzte Blende (43) möglichst nahe am Meßschlitz (19′) angeordnet ist.

3. Einrichtung nach Anspruch 1 oder 2, dadurch gekennzeichnet, daß zwischen den einzelnen Blenden (40 bis 43) gleiche Abstände (a) vorhanden sind.

4. Einrichtung nach Anspruch 1 oder 2, dadurch gekennzeichnet, daß zwischen den Blenden (40 bis 43) mit zunehmender Blendenöffnung größer werdende Abstände vorhanden sind.

5. Einrichtung nach einem der Ansprüche 1 bis 4, dadurch gekennzeichnet, daß die Blenden (40 bis 43) jeweils die Form eines Rahmens haben, dessen Rahmenöffnung als umlaufende Schneide (38) ausgebildet ist.

6. Einrichtung nach Anspruch 5, dadurch gekennzeichnet, daß die Schneide (38) an der der Lichtquelle (2) abgewandten Seite eine Hinterschneidung (39) aufweist, die vom direkten, von der Lichtquelle (2) ausgehenden Licht nicht mehr getroffen wird.

7. Einrichtung nach Anspruch 6, dadurch gekennzeichnet, daß der Hinterschneidungswinkel (alpha) von Rahmen zu Rahmen in Strahlungsrichtung stumpfer wird.

8. Einrichtung nach einem der Ansprüche 1 bis 7, dadurch gekennzeichnet, daß der Blendensatz (25′) als ein in das Gehäuse (17′) der Einrichtung (18) einsetzbarer, starrer oder halbstarrer Blendeneinsatz ausgebildet ist.

9. Einrichtung nach Anspruch 8, dadurch gekennzeichnet, daß der Blendeneinsatz (44; 45) aus Teilen (46, 47; 48, 49) besteht, die wie Wanne (46, 49) und Deckel (47, 48) aufeinanderpassen.

10. Einrichtung nach Anspruch 9, dadurch gekennzeichnet, daß der Blendeneinsatz aus mindestens einem wannenförmigen Unterteil (49) und mindestens einem wannenförmigen Oberteil (48) besteht, deren Teilfugen (52, 53) vorzugsweise durch die Schmalseiten der Blendenrahmen gehen.

11. Einrichtung nach Anspruch 9, dadurch gekennzeichnet, daß der Blendeneinsatz (44) aus mindestens einem wannenförmigen Teil (46) und aus mindestens einem dazu passenden deckelförmigen Teil (47) besteht, deren Teilfugen (50, 51) in den Rahmenecken oder in der Nähe der Rahmenecken liegen.

12. Einrichtung nach einem der Ansprüche 1 bis 11, dadurch gekennzeichnet, daß zwischen Lichtquelle (2) und Meßschlitz (19') ein die Lichtstrahlen parallelisierendes optisches Element (30) angeordnet ist.

13. Einrichtung nach einem der Ansprüche 1 bis 12, dadurch gekennzeichnet, daß die lichtempfindlichen Elemente (3", 4") rechteckige Lichteintrittsflächen besitzen, daß die Schmalseite des einen querliegenden Elements (3") neben der Breitseite des anderen hochkantliegenden Elements (4") angeordnet ist und daß der zu messende Faden (1) vor dem querliegenden Element (3") angeordnet ist.

14. Einrichtung nach einem der Ansprüche 1 bis 13, dadurch gekennzeichnet, daß der zu messende Faden (1) vor demjenigen lichtempfindlichen Element (3") angeordnet ist, das sich gegenüber dem hinteren Teil des Meßschlitzes (19) befindet und daß beim Vorbeigang des Fadens (1) vor dem jeweils anderen lichtempfindlichen Element (4") anläßlich des Einführens des Fadens (1) in den Meßschlitz und/oder anläßlich des Herausbewegens des Fadens (1) zur Seite hin aus dem Meßschlitz (19) ein kurzzeitiges Fadensignal gewinnbar ist.

15. Einrichtung nach einem der Ansprüche 1 bis 14, dadurch gekennzeichnet, daß die beiden nebeneinanderliegenden lichtempfindlichen Elemente (3', 4') staubdicht gekapselt und/oder in eine staubdichte Kammer eingesetzt sind.

16. Einrichtung nach einem der Ansprüche 1 bis 15, dadurch gekennzeichnet, daß die Lichtquelle (2), gegebenenfalls einschließlich eines Blendensatzes (25) und/oder einschließlich eines die Lichtstrahlen parallelisierenden optischen Elements (30, 31), in einer staubdichten Kammer (13) angeordnet ist.

17. Einrichtung nach einem der Ansprüche 1 bis 16, dadurch gekennzeichnet, daß mit Abstand von einem den Meßschlitz (19') enthaltenden Rahmen oder Gehäuse (17') oberhalb und unterhalb des Meßschlitzes (19') je ein Fadenführungselement (5, 6) angeordnet und durch eine Tragkonstruktion (33, 34) mit dem Rahmen oder Gehäuse (17') derartig verbunden ist, daß zwischen Meßschlitz (19') und Fadenführungselementen (5, 6) ein freier Durchgang (35, 36) für Reinigungsluft vorhanden ist.

18. Einrichtung nach Anspruch 17, dadurch gekennzeichnet, daß die Tragkonstruktion (33') des auf Abstand vom Meßschlitz (19') gehaltenen Fadenführungselements (5') ein Teil des die Einrichtung (18) umschließenden oder tragenden Rahmens oder Gehäuses (17") ist.

19. Einrichtung nach Anspruch 17 oder 18, dadurch gekennzeichnet, daß die Tragkonstruktion (33') des Fadenführungselements (5') aus einem durch Biegestanzen, Spritzgießen oder auf dergleichen Weise aus dem Rahmen, einer Gehäusewand oder dem Deckel (17") der Einrichtung (18) herausgebildeten, nach außen vorspringenden Teil besteht.

## Claims

1. Device for measuring a yarn with which a conclusion is drawn about at least one yarn dimension from the degree of shading which the yarn (1) or its mirror image causes on a light-sensitive element (4; 4'; 4") and with which the yarn is inserted into a measuring slot (19, 19') of the measuring device, wherein to the side of the measuring slot (19, 19') there are adjacently arranged two light-sensitive elements (3, 4; 3', 4'; 3", 4") as pick-ups which receive light (23) passing from one and the same light source (2) transversely through the measuring slot (19, 19'), the yarn (1) is arranged and guided through guide elements (20; 5, 6) such that it shades only one of the two light-sensitive elements (3, 3', 3"), and the pick-ups (3, 4; 3', 4'; 3", 4") are attached to a comparison device (9) and/or evaluating device (14) in which physical values resulting from the luminous fluxes received by the two pick-ups (3, 4; 3', 4'; 3", 4") are compared with one another, the luminous flux received by the pick-up (4; 4'; 4") not shaded by the yarn (1) serving as a basis for comparison and the comparison result being a gauge of the measured dimension of the yarn (1), characterised in that a set of apertures (25; 25') is arranged between light source (2) and measuring slot (19'), the window area of the apertures (40 to 43) increasing progressively from aperture to aperture as viewed from the light source.

2. Device according to claim 1, characterised in that the first aperture (40) of the set of apertures (25') is arranged as close as possible to the light source (2) and the last aperture (43) as close as possible to the measuring slot (19').

3. Device according to claim 1 or 2, characterised in that equal distances (a) are provided between the individual apertures (40 to 43).

4. Device according to claim 1 or 2, characterised in that distances which become greater as the aperture opening increases are provided between the apertures (40 to 43).

5. Device according to one of claims 1 to 4, characterised in that the apertures (40 to 43) each have the form of a frame of which the frame opening is constructed as a peripheral fine edge (38).

6. Device according to claim 5, characterised in that the fine edge (38) has, on the side remote from the light source (2), an undercut (39) which is not affected by the direct light issuing from the light source (2).

7. Device according to claim 6, characterised in that the undercut angle (alpha) becomes more obtuse from frame to frame in the radiation direction.

8. Device according to one of claims 1 to 7, characterised in that the set of apertures (25') is constructed as a rigid or semi-rigid aperture insert which can be inserted into the housing (17') of the device (18).

9. Device according to claim 8, characterised in that the aperture insert (44, 45) consists of parts (46, 47; 48, 49) which fit on one another like a tank (46, 49) and lid (47, 48).

10. Device according to claim 9, characterised in that the aperture insert consists of at least one tank-shaped lower part (49) and at least one tank-shaped upper part (48) of which the joints (52, 53) preferably pass through the narrow sides of the aperture frame.

11. Device according to claim 9, characterised in that the aperture insert (44) consists of at least one tank-shaped part (46) and of at least one lid-shaped part (47) adapted thereto, of which the joints (50, 51) lie in the frame corners or in the vicinity of the frame corners.

12. Device according to one of claims 1 to 11, characterised in that an optical element (30) which renders the light rays parallel is arranged between light source (2) and measuring slot (19').

13. Device according to one of claims 1 to 12, characterised in that the light-sensitive elements (3", 4") have rectangular light-inlet areas, in that the narrow side of one transverse element (3") is arranged next to the broad side of the other upright element (4") and in that the yarn (1) to be measured is arranged in front of the transverse element (3").

14. Device according to one of claims 1 to 13, characterised in that the yarn (1) to be measured is arranged in front of the light-sensitive element (3") located opposite the rear part of the measuring slot (19) and in that a transient yarn signal can be obtained as the yarn (1) passes the other respective light-sensitive element (4") on the occasion of the introduction of the yarn (1) into the measuring slot and/or on the occasion of the movement of the yarn (1) sideways from the measuring slot (19).

15. Device according to one of claims 1 to 14, characterised in that the two adjacent light-sensitive elements (3', 4') are encapsulated in a dust-tight manner and/or are inserted into a dust-tight chamber.

16. Device according to one of claims 1 to 15, characterised in that the light source (2), optionally including a set of apertures (25) and/or including an optical element (30, 31) which renders the light rays parallel, is arranged in a dust-tight chamber (13).

17. Device according to one of claims 1 to 16, characterised in that a respective yarn guide element (5, 6) is arranged above and below the measuring slot (19') at a distance from a frame or housing (17') containing the measuring slot (19') and is connected by a carrying construction (33, 34) to the frame or housing (17') such that a free passage (35, 36) for cleaning air is provided between measuring slot (19') and yarn guide elements (5, 6).

18. Device according to claim 17 characterised in that the carrying construction (33') of the yarn guide element (5') kept at a distance from the measuring slot (19') is a part of the frame or housing (17") surrounding or carrying the device (18).

19. Device according to claim 17 or 18, characterised in that the carrying construction (33') of the yarn guide element (5') consists of an outwardly projecting part formed from the frame, a housing wall or the lid (17") of the device (18) by combined cutting and bending, injection moulding or in a similar manner.

**Revendications**

1. Dispositif pour mesurer un fil, dans lequel, à partir du degré d'occultation que provoque le fil (1) ou son image réfléchie sur un élément photosensible (4;4';4"), on détermine au moins une dimension du fil et dispositif dans lequel le fil est introduit dans une fente de mesure (19,19') du dispositif de mesure, où, sur le côté de la fente de mesure (19,19') sont disposés deux éléments photosensibles (3,4;3',4';3",4") servant de capteur de valeur de mesure et recevant la lumière (23), venant d'une seule et même source lumineuse (2), passant transversalement dans la fente de mesure (19,19'), le fil étant disposé et guidé par l'élément de guidage (20;5,6), de telle façon qu'il n'occulte que l'un des deux éléments photosensibles (3,3',3"), et les capteurs de valeur de mesure (3,4;3',4';3",4") étant raccordés à un dispositif comparateur (9) et/ou à un dispositif d'exploitation (14), dans lequel sont comparées entre elles des grandeurs physiques qui résultent des flux lumineux reçus des deux capteurs de valeur de mesure (3,4;3',4';3",4"), le flux lumineux qui est reçu du capteur de valeur de mesure (4;4';4") qui n'est pas occulté par le fil (1) servant de base de comparaison et le résultat de la comparaison étant une valeur indicative de la dimension du fil (1), caractérisé en ce qu'entre la source lumineuse (2) et la fente de mesure (19') est disposé un jeu de diaphragmes (25;25'), la surface de fenêtre des diaphragmes (40 à 43) augmentant progressivement d'un diaphragme à l'autre, lorsqu'on observe depuis la source lumineuse.

2. Dispositif selon la revendication 1, caractérisé en ce que le premier diaphragme (40) du jeu de diaphragme (25') est disposé aussi près que possible de la source lumineuse (2) et le denier diaphragme (43) est disposé aussi près que possible de la fente de mesure (19')

3. Dispositif selon la revendication 1 ou 2, caractérisé en ce qu'il y a des distances (a) identiques entre les différents diaphragmes (40 à 43).

4. Dispositif selon la revendication 1 ou 2, caractérisé en ce qu'il y a des distances de plus en plus grandes, avec une ouverture de diaphragme qui va en augmentant, entre les diaphragmes (40 à 43).

5. Dispositif selon l'une des revendications 1 à 4, caractérisé en ce que les diaphragmes (40 à 43) ont chacun la forme d'un cadre, dont l'ouverture de cadre est une lame (38) de pourtour.

6. Dispositif selon la revendication 5, caractérisé en ce que, du côté opposé à la source lumineuse (2), la lame (38) présente une contre-dépouille (39) qui n'est plus sur le chemin de la lumière venant de la source lumineuse (2).

7. Dispositif selon la revendication 6, caractérisé en ce que l'angle de contre dépouille (alpha) est de plus en plus obtus, d'un cadre à l'autre, dans le sens de la lumière.

8. Dispositif selon l'une des revendications 1 à 7, caractérisé en ce que le jeu de diaphragmes (25') est réalisé sous forme d'un jeu de diaphragmes rigide, ou semi-rigide, insérable dans le boîtier (17') du dispositif (18).

9. Dispositif selon la revendication 8, caractérisé en ce que la garniture de diaphragme (55;45) se compose de pièces (46,47;48,49) s'ajustant les unes dans les autres, comme un réceptacle (45,49) et un couvercle (47,48).

10. Dispositif selon la revendication 9, caractérisé en ce que la garniture de diaphragme se compose d'au moins une pièce inférieure (49) en forme de réceptacle et d'au moins une pièce supérieure (48) en forme de réceptacle, pièces dont les joints de séparation (52,53) passent de préférence par les petits côtés des cadres de diaphragme.

11. Dispositif selon la revendication 9, caractérisé en ce que la garniture de diaphragme (44) se compose d'au moins une pièce inférieure en forme de réceptacle (46) et d'au moins une pièce en forme de couvercle (47), lui étant ajustée, pièces dont les joints de séparation (50,51) sont situés dans les coins de cadre ou à proximité de ceux-ci.

12. Dispositif selon l'une des revendications 1 à 11, caractérisé en ce qu'un élément optique (30) rendant parallèles les rayons lumineux est disposé entre la source lumineuse (2) et la fente de mesure (19').

13. Dispositif selon l'une des revendications 1 à 12, caractérisé en ce que les éléments photosensibles (3",4") comportent des surfaces d'entrée de lumière rectangulaires, le petit côté de l'un (3") des éléments transversaux étant disposé à côté du grand côté de l'autre élément (4") disposé de chant, et le fil à mesurer (1) étant disposé devant l'élément (3") situé en position transversale.

14. Dispositif selon l'une des revendications 1 à 13, caractérisé en ce que le fil à mesurer (1) est disposé devant l'élément (3") des éléments photosensibles qui se trouve en face de la partie arrière de la fente de mesure (19), et que l'on peut obtenir un signal de fil bref, lors du passage du fil (1) devant l'autre élément sensible (4"), à l'occasion de l'introduction du fil (1) dans la fente de mesure, et/ou à l'occasion de la sortie du fil (1) sur le côté, hors de la fente de mesure (19).

15. Dispositif selon l'une des revendications 1 à 14, caractérisé en ce que les deux éléments photosensibles (3',4') placés à côté l'un de l'autre sont encapsulés de façon étanche à la poussière et/ou insérés dans une chambre étanche à la poussière.

16. Dispositif selon l'une des revendications 1 à 15, caractérisé en ce que la source lumineuse (2) est disposée dans une chambre (13) étanche à la poussière, le cas échéant y compris un jeu de diaphragmes (25) et/ou y compris un élément optique (30,31) assurant le parallélisme des rayons lumineux.

17. Dispositif selon l'une des revendications 1 à 16, caractérisé en ce qu'un élément de guidage de fil (5,6) est disposé, respectivement en amont et en aval de la fente de mesure (19'), à distance d'un cadre ou boîtier (17') contenant la fente de mesure, et relié, grâce à une construction support (33,34), au cadre ou boîtier (17'), de telle façon qu'entre fente de mesure (19') et éléments de guidage de fil (5,6) subsiste un passage libre (35,36) pour de l'air de nettoyage.

18. Dispositif selon la revendication 17, caractérisé en ce que la construction support (33') de l'élément de guidage de fil (5') porté à distance de la fente de mesure (19') fait partie du cadre ou boîtier (17") qui entoure ou porte le dispositif (18).

19. Dispositif selon la revendication 17 ou 18, caractérisé en ce que la construction support (33') de l'élément de guidage de fil (5') se compose d'une pièce faisant saillie vers l'extérieur, formée par estampage, moulage par injection ou de manière analogue, à partir du cadre, d'une paroi du boîtier ou du couvercle (17") du dispositif (18).

FIG. 1

FIG. 2

FIG. 9

# FIG. 3

# FIG. 5

# FIG. 4

FIG.6

FIG.7

FIG.8